Europäisches Patentamt

European Patent Office

Office européen des brevets

(19)

(11) Publication number: **0 261 657**
A2

# (12) EUROPEAN PATENT APPLICATION

(21) Application number: 87113903.6

(22) Date of filing: 23.09.87

(51) Int. Cl.4: **H04N 5/33** , G01J 5/30

(30) Priority: 26.09.86 US 912885
26.09.86 US 912884
26.09.86 US 912883

(43) Date of publication of application:
30.03.88 Bulletin 88/13

(84) Designated Contracting States:
DE FR GB IT

(71) Applicant: HONEYWELL INC.
Honeywell Plaza
Minneapolis Minnesota 55440(US)

(72) Inventor: Butler, Neal R.
144 School Street
Acton Massachusetts 01720(US)
Inventor: McClelland, Jeff L.
301 Lowell Street, Apt. 34
Somerville Massachusetts 02143(US)
Inventor: Iwasa, Shigesato
Brown Road
Harvard Massachusetts 01451(US)

(74) Representative: Rentzsch, Heinz et al
Honeywell Europe S.A. Holding KG Patent-
und Lizenzabteilung Postfach 10 08 65
D-6050 Offenbach am Main(DE)

(54) Input circuit for an infrared imaging system.

(57) In an infrared imaging array a preamplifier (40) is associated with each detector (41) in a dense detector array; solid state manufacturing techniques are utilized. To bias the preamplifier either a high bias impedance is effectively provided by doping the material from which the detector is made or a diode or transistor is connected in parallel the the detector; or a MOSFET bias switch (46) is provided that is periodically operated to place charge on the gate of the preamplifier transistor (40) to maintain it at its bias level. When the bias switch is not operated, the associated detector detects and a reading is taken from each detector in the array.

FIG. 3

EP 0 261 657 A2

## Input Circuit for an Infrared Imaging System

This invention relates to an infrared imaging system, and more particularly to a solid state imaging system utilizing pyroelectric detectors in an array.

In the prior art it has been recognized that infrared imaging systems having few or no moving or fragile parts are desirable. Such infrared imaging systems should be very small because detector arrays would be fabricated on a single large scale integrated circuit chip along with associated electronics. Basically, two types of detectors are typically considered for such a solid state infrared imaging system. There are ferroelectric detectors which must be operated above the Curie temperature of the ferroelectric material, as is known in the art, and typically require that the detectors be heated. Above the Curie temperature the ferroelectric detectors have a cubic crystal structure that is very susceptible to polarization, but is not spontaneously polarized as it is below the Curie temperature. Thus, above the Curie temperature ferroelectric detectors require an external electric field in order to generate a signal. The other type of detector is a pyroelectric detector that is operated below its Curie temperature and exhibits a spontaneous dipole moment that produces an internal electric field, so an externally generated electric field is not required for these detectors to work.

In the prior art, infrared imaging systems utilizing ferroelectric detectors have been built. They have separate detector heating means and electric field biasing means for the detectors, and rows of detectors are sequentially enabled and connected to a common preamplifier. These preamplifiers are made up of a combination of integrated circuits and discrete components. The separate field biasing means and separate preamplifiers require increased space and increase the cost of the infrared imaging system.

To minimize circuit cost, a single preamplifier is used to amplify the signal from all detectors in each row of an array of detectors. With this common preamplifier arrangement the fundamental sensitivity limit for each individual detector cannot be achieved.

Other infrared detector array arrangements have been provided in the prior art that do not need to be heated, but they have another problem. They have to be cooled by a cryogenic cooler to temperatures of in the order of 77 Kelvin and below. In addition, such cryogenic cooling arrangements often utilize a bottle of a liquified gas such as nitrogen. This is bulky and the bottle must be changed frequently as the gas is used up.

Thus, there is a desire for an infrared imaging system having an infrared detector array that does not have to be heated or cooled (which requires power), does not require separate electric field detector biasing circuits, and avoids the problems associated with shared amplifiers.

These objects are achieved by the present invention as characterized in claim 1. A pyroelectric detector array is utilized that operates well below its Curie temperature so it does not require heating. In addition, shared preamplifiers are not used to amplify the output from the detectors. Rather, a preamplifier is manufactured along with each detector of the pyroelectric detector array. Problems of not being able to manufacture discrete resistors of values needed for biasing the integrated preamplifiers are circumvented by innovative biasing techniques. Further details and preferred embodiments of the invention are described in the dependent claims.

The invention will be better understood upon reading the following detailed description in conjunction with the drawing in which:

Fig. 1 is a block diagram of an infrared focal plane system utilizing the present invention:

Fig. 2 is a schematic drawing of a pyroelectric detector connected to the input of a transistor amplifier and the two of them are biased from a voltage supply through a very high resistance that is fabricated into the detector;

Fig. 3 shows a pyroelectric detector connected to the input of a transistor amplifier and the two of them are biased by using a transistor switch to periodically apply voltage to both the gate of the amplifier transistor and the detector;

Fig. 4 is a schematic drawing of a pyroelectric detector connected to the input of an amplifier that is biased from a voltage supply through a nonconducting diode that appears in the circuit as a high impedance resistor;

Fig. 5 is an alternative embodiment of the invention also showing a pyroelectric detector connected to the input of an amplifier and the two of them are biased by a transistor that can either be operated as a transistor switch to periodically apply voltage to the gate of the amplifier transistor and to the detector to bias same, or the transistor switch can instead be operated as a high impedance resistor; and

Fig. 6 is a block diagram similar to Fig. 1 of a modified infrared focal plane system.

Pyroelectric detectors are in essence temperature sensitive capacitors having two conductive plates, and the dielectric between the plates is a material such as lithium tantalate which is used in the preferred embodiment of the invention. Lithium tantalate has a Curie temperature of 620 Centigrade, well above the temperature at which the detector is operated. These pyroelectric materials have a dielectric constant that is temperature sensitive. Thus, the detectors are variable capacitors that change capacitance with temperature. Lithium tantalate has a dielectric constant around 43 at room temperature. When these temperature sensitive capacitors (pyroelectric detectors) are placed in an array made up of rows and columns of a large number of detectors and an infrared (IR) image is focused on them by an appropriate IR lens system, the capacitance of each detector is varied by the intensity of the infrared energy impinging upon the detector. Thus, the voltage across each detector in an array directly represents a part of the infrared image that is focused on the array. When each of the detectors is connected to an amplifier, and the voltage across the detectors is indicated by an electrical signal output from the amplifiers, the output signal from the amplifiers is a representation of the IR image and can be formatted and used to display the infrared image on a raster scan video display.

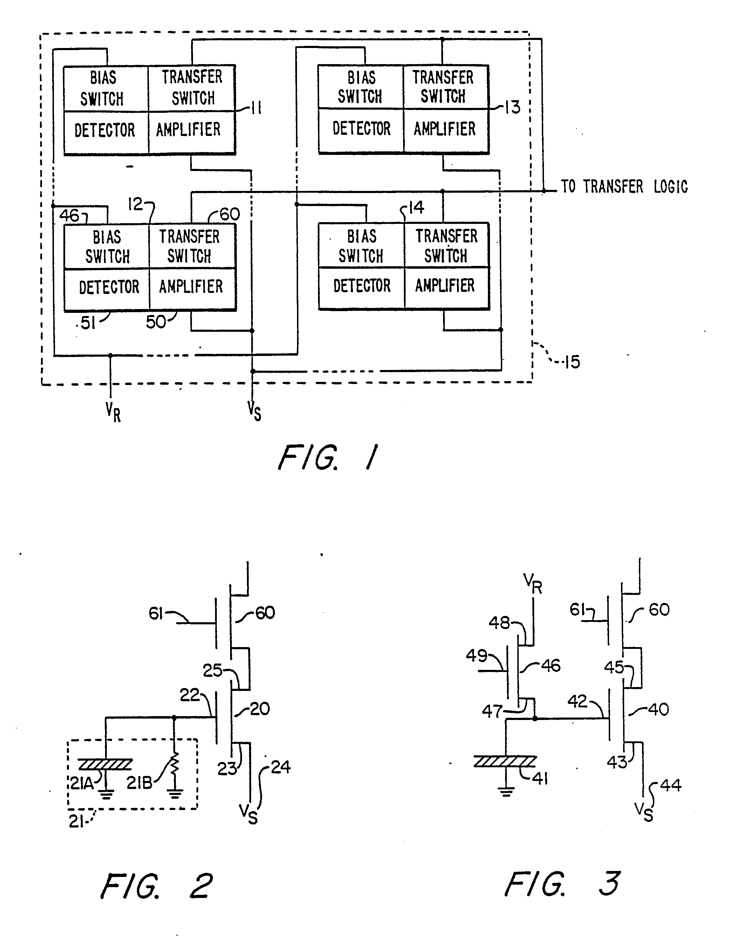

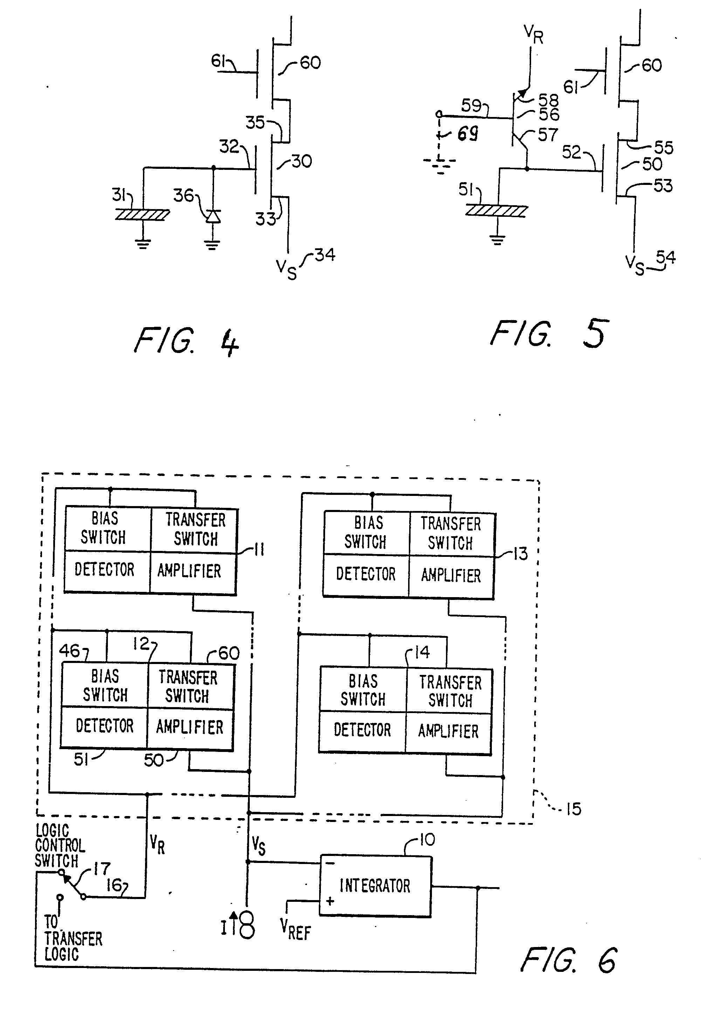

In Figure 1 is shown a schematic block diagram of an infrared focal plane array system that can provide a raster scan signal representing the infrared image focused on the detector array. An infrared lens system (not shown) made of germanium or other suitable material is used in a manner well known in the art to focus an infrared image on pyroelectric detector array 15 made up of rows and columns of individual detector array circuits such as represented as circuits 11 through 14. There can actually be thousands of these detector array circuits. Each representative detector array circuit 11 through 14 is made up of three or four elements each, which are those elements seen in Figures 2 and 5 and described in detail further in this specification. With reference to Figure 3, the bias switch is transistor 46, the transfer switch is transistor 60, the detector is capacitor 41, and the amplifier is transistor 40. However, the alternative embodiments of the detector array circuit shown in Figures 2, 4 or 5 may also be used in place of that shown in Figure 3.

In representative circuit 12 in Figure 1, the detector amplifier is a metal-oxide-semiconductor field effect transistor (MOSFET) to the gate input of which is connected the pyroelectric detector. The transfer switch is also a MOSFET transistor. When the circuit of Figure 2 is utilized, in circuits 11 through 14 there is no bias switch; but when the circuit shown in Figure 3 is used the bias switch transistor is a bipolar transistor. It is easy to fabricate these transistors and the pyroelectric detector as array 15 is fabricated as a whole.

In operation means that are not shown, but are well known in the art, are used for modulating of chopping the infrared image focused on the detector array 15. That is, the image is interrupted at a periodic rate. The purpose that is served is to be able to discriminate between the infrared image signal and various background signals including noise and random temperature change within each of representative circuits 11 through 14 in detector array 15. A reference signal including only the background signals is obtained from the detectors of array 15 while it has no infrared image focused thereon due to the modulating action, and a sample signal is obtained from the detector when it has an image focused theron. When the reference signal is subtracted from the sample signal the difference signal is only the image signal which is used to display the infrared image. This modulating technique is used with the embodiments of the invention described hereinbelow.

In operation of the present invention using the detector array circuit shown in Figure 3 only, the sample signals are actually taken twice before bias switch transistor 46 of Figure 3 is used to reset the bias on detector amplifier 40 and on detectors 41. This is done to remove uncertainty in the voltage that remains on the detectors and is minimized by operating bias switch transistor 46 a fewer number of times. This operation is described in greater detail further in this specification. Using the detector array circuit shown in Figure 2, bias is not periodically applied to the detector amplifier and detector. The reason for this is described in detail further in this specification.

In Figures 2 and 3 are shown two alternate embodiments of the invention. Preamplifiers are provided with each pyroelectric detector, and special means for biasing the preamplifiers and the detectors are provided in accordance with the teaching of the present invention. The detectors are periodically exposed to the infrared image focused on the detector array as previously described to get the reference and sample signals which are subtracted from each other as previously described to get the difference or image signal which is used to display the infrared image. In response to be being exposed to the infrared image the capacitance of the detectors changes and thereby changes the voltage at the gate of the associated preamplifier to thereby change its conduction level. The conduction level of all preamplifiers, which reflects the portion of the infrared image focused on the associated detector in detector array 15, is read out in parallel and then converted to a scanning format to create a raster scan video signal of the infrared image focused on the array of detectors. In between being exposed to the infrared image the voltage across the detectors of all detector array circuits 11 through 14 is returned to a quiescent level by use of biasing means of the bias switch and the same read out is again used to obtain the reference signal. As previously described, the reference signal is subtracted from the sample signal to obtain the infrared image signal. The circuits used to read out detector array circuits 11 through 14 are not shown herein, but are well known in the art.

In figure 2 transistor 20 is a metal-oxide-semiconductor field effect transistor (MOSFET), and pyroelectric capacitor detector 21 is connected to its gate terminal 22. To bias transistor 20 without destroying the small signal created by detector 21A, a large impedance must be connected between ground potential and gate 22. In accordance with the teaching of this first embodiment of the invention, the large impedance is created by doping the detector material. This creates an effective impedance 21B in the order of $10^{12}$ to $10^{13}$ ohms in parallel with the detector material 21A, although it is part thereof. The required bias is provided and the small signal generated by detector 21 is preserved and is applied to gate terminal 22 of preamplifier transistor 20. As may be seen in Figure 2, source terminal 23 of transistor 20 is connected to a voltage supply ($V_s$) 24. On drain terminal 25 of transistor amplifier 20 is output an amplified signal representing the portion of the infrared image impinging upon infrared detector 21 in each of representative detector array circuits 11 through 14. Transfer switch 60 is periodically operated to read out the video signal from amplifier 20 that is used to display the infrared image on a video display. Transfer switch 60 is a transistor gate that is well known in the art and is controlled at gate 61.

Figure 3 shows an alternative embodiment of the invention using a technique for biasing MOSFET preamplifier transistor 40 that doesn't use a high impedance like impedance 21B previously described with reference to Figure 2. Instead, a bipolar transistor 46 is provided with every detector 41. Transistor 46 is connected between a reset voltage supply $V_R$ and gate terminal 42 of preamplifier transistor 40, and transistor 46 is switched on and off periodically by a control signal applied to its gate terminal 49 to apply reset voltage $V_R$ to gate terminal 42 and to detector 41. As mentioned previously, this is done after every two read outs. A charge is thereby placed on gate 42 of transistor 40 and on detector 41 and biases both of them to their quiescent operating point. The charge placed on gate 42 leaks off very slowly due to the high internal impedances of detector 41 and gate 42 of transistor 40. While bias switch transistor 46 is turned off, each time after gate 42 and detector 41 have been recharged to their quiescent point, detector 41 is briefly exposed to a portion of the infrared signal focused on detector array 15. In response thereto the capacitance of detector 41 changes and thereby alters the bias voltage at gate terminal 42. This causes the conduction level of transistor 40 to change. Transistor 40 is read out by momentarily placing transfer gate transistor 60 in its conductive state by a signal on its gate 61 in response to a signal from external circuitry that is not shown, but is well known in the art. This is done before transistor 46 is again turned on to reset the bias levels of transistor 40 and detector 41. In operation the bias charge on the gate of transistor 40 changes slowly enough that transistor 40 is read out twice before transistor 46 is turned on to reset the bias level of transistor 40. An advantage to this slower resetting of the bias level is that when transistor is turned off there is an uncertainty in the voltage that remains on the detector 41, which is noise, and which is minimized by turning transistor 46 on and off a fewer number of times.

To remove the switch noise caused by the operation of bias switch transistor 46, in Figure 3 only, the sample signals read out of transistor 40 for two consecutive read outs when the infrared image is focused on detector 41 are subtracted from each other. As described in the last paragraph bias switch 46 is only operated before one of these two sample signal read outs, and the subtraction of the sample signal before which there was not bias switch operation from the sample signal before which there was a switch operation yield the switch noise which can then be removed from the sample signal right after the switch operation. This is done because for each of these two consecutive read outs the reset transistor 46 switching noise is constant, and the infrared signal sample is the difference of the two read outs. This technique can be utilized because the rate of change of the gate bias voltage is very slow compared to the read out rate of transistor 20. Thus, the first signal sample read out right after the switch operation is a first read out and the next signal sample read out is a reference signal read out. By subtracting these two read outs the signal-to-noise ratio of the infrared signal of interest is improved by removing the switch noise from the first signal sample.

In operation of a complete IR imaging system, the modulating means, not shown, periodically interrupts the infrared image and bias switch transistor 46 resets the bias voltage to both preamplifier 40 and detector 41 while there is no image focused on the detector. In addition, while there is no infrared image focused on detector 41 the system next reads out the conduction level of preamplifier 40 to determine a reference level which includes miscellaneous circuit noise. Then the modulating means causes the infrared image to impinge on detector 41 and two read out samples are taken that are processed as described in the previous paragraph. The reference level read out is subtracted from the two following sample signal read outs to remove the noise.

The transfer switch 60 in each of Figures 2 and 3, and shown in circuits 11 through 14 in Figure 1, are operated under control of external timing circuits that are well known in the art so are not described herein, to read out the condition level of the associated amplifiers 40 as just described for each of the reference signals and the two sequential signal samples. Transfer switch 60 is a transistor gate that is well known in the art so is not described in detail herein.

In a complete infrared imaging system the drains of the transfer gate transistors 60 are each connected to a corresponding tap of a CCD shift register or another type of analog multiplexer. In operation the pyroelectric detectors accumulate signal and thereby set the operation level of their corresponding preamplifier transistor 40. Thus, preamplifier transistors 40 are enabled to be quickly read out in parallel to CCD shift registers (not shown) that are then shifted out at a slower rate to create a raster scan signal representing the infrared image.

In Figure 4 detector 31 is connected to gate 32 of MOSFET transistor 30, and a diode is added in parallel with the capacitor detector 31 with its cathode connected to gate terminal 32. For correct operation of the circuit shown in Figure 4 transistor 30 must have a depletion mode threshold in which it operates with zero volts between source terminal 33 and gate terminal 32. This is done so that transistor 30 can operate without having a large enough bias voltage on gate terminal 32 that will cause diode 36 to conduct. To bias transistor 30 without destroying the small signal created by detector 31, a large impedance must be connected between ground potential and gate 32 of transistor 30. In accordance with the teaching of this embodiment of the invention, the required large impedance is created by using diode 36. Fabricated of diodes is easily done with CCD manufacturing technology and they are made as a part of the amplifier array. The diode 36 is not normally operated in a conducting state for any reason. A diode that only has a small voltage applied to it in a forward biased mode does not conduct because the voltage is insufficient to exceed the breakover level and go into conduction. Diode 36 is operated in this manner. At the nonconduction level the impedance of diode 36 in the forward bias direction is in the order of $10^{12}$ ohms which is the right value for biasing transistor 20 while not loading down the signal from detector 31. As may be seen in Figure 4 the source terminal 33 is connected to a voltage supply ($V_s$) 34. On drain terminal 35 of transistor amplifier 30 is output an amplified electrical signal representing the portion of the infrared image impinging upon infrared detector 31. Transfer switch 60 is periodically operated to read out the amplified signal (video signal) from amplifier 30 that is formatted and used to display the infrared image on a raster scan video display.

Figure 5 shows the alternate embodiment of the invention for biasing a MOSFET preamplifier transistor 50. A bias switch transistor 56 is provided with every detector 51 that is an NPN transistor rather than a bipolar transistor. This is done because these types of transistors are inherently well matched in manufacture of a large number of them, so their resistance is fairly well constant from transistor to transistor. This is necessary for the large detector array 15. Transistor 56 is periodically operated under control of external circuitry that is not shown at its base electrode 59 to periodically reset the bias charge on the gate of the MOSFET preamplifier transistor 50, and at the same time variations in MOSFET preamplifier transistor 50 can also be compensated for by independently setting the on level of transistor 56. This helps to control noise increase in the circuit, because the external circuit can be used to sense temperature changes and compensation can be applied through controlling the on conduction level of transistor 56 at base 59. The conduction level of NPN transistors 56 can be adjusted to balance the gain of all preamplifiers 50 in the array. The above described operation of Figure 3 regarding signal read out and the removal of noise also applies to the operation of Figure 5 so is not repeated here.

The detector array circuit cell shown in Figure 5 also includes a transfer gate transistor 60 that is used to read out the conduction level of detector 51 as described above with reference to Figure 3. However, in Figure 5 the emitter 58 and collector 57 of transistor 56 may be connected between the gate inputs 52 and 61 of the two MOSFETs 50 and 60. As previously described, transfer switch 60 is a transistor gate that is well known in the art so is not described in detail herein, and is operated under control of external circuitry.

In a complete infrared imaging system the drain terminals of transfer gate transistors 60 are each connected to a corresponding tap of a CCD shift register or another type of analog multiplexer. In operation the pyroelectric detectors accumulate signal and thereby set the operation level of their corresponding preamplifier transistor 50. Thus, preamplifier transistors 50 are enabled to be quickly read out in parallel to CCD shift registers (not shown) that are then shifted out at a slower rate to create a scan signal representing the infrared image.

More particularly, initially transfer gate 60 is disabled and transistor 56 is turned on to reset the bias voltage level on the gate 52 of preamplifier 50 and on detector 51. Then reset transistor 56 is turned off or near off and pyroelectric detector 51 is exposed to the infrared image and changes its capacitance in response thereto. After a brief period of detector 51 responding to the infrared image focused on it, transfer gate transistor 60 is momentarily turned on to read out the detector as the conduction level of preamplifier 50.

An alternative arrangement is also shown in Fig. 5 by connecting the base electrode 59 to ground as indicated by dotted line 69. The base/collector path of transistor 56 then forms a bias resistor similar to resistor 21B in Fig. 2.

In representative circuit 12 in Figure 6, the detector amplifier and the transfer switch are metal-oxide-semiconductor field effect transistors (MOSFET) to the gate input of which is connected the pyroelectric detector. When the circuit of Figure 3 is utilized in circuits 11 through 14, the bias switch is a bipolar transistor; but when the circuit shown in Figure 5 is used the bias switch is an NPN transistor and the pyroelectric detector as array 15 is fabricated as a whole.

Also included with detector array 15 in Figure 6 is a feedback circuit made up of integrator 10 for monitoring the difference between voltages $V_s$ and $V_{REF}$ and correcting voltage $V_R$ to compensate for such things as temperature changes. When the overall temperature of the system changes, and the change is such to make the source voltages $V_s$ more positive, the feedback circuit in reset integrator 10 forces $V_s$ equal to $V_{REF}$ by controlling the reset resistance through voltage $V_R$. $V_{REF}$ is an estimate of the correct value for $V_s$. For the cases where voltage $V_R$ and a control signal at gate 61 of transfer switch 60 are shared integrator 10 and transfer timing logic circuitry (not shown) time share access to their respective devices which are associated with each detector over a common control lead 16. A logic control switch 17 is used to transfer the access via lead 16 to either integrator 10 or to transfer logic circuitry (not shown) which is used to operate transfer switches 60 in circuits 11 through 14. Since the action of reset integrator 10 is relatively slow, its operation is practically unaffected by the time sharing since the normal off time of the transfer switches 60 in each of circuits 11 through 14 is relatively short. When voltage $V_R$ and the control signal at 61 are brought out separately, that is they are not shared, the control switch 17 is not necessary and integrator 10 continuously controls voltage $V_R$.

While what has been described therein are the preferred embodiments of the invention, it will be understood that those skilled in the art may make many changes without departing from the spirit and scope of the invention. For example, while N-channel MOSFETs are preferably used in the circuits described herein, the circuits could be simply modified to operate with P-channel MOSFETs. In addition, other pyroelectric materials could be used to fabricate the detectors.

## Claims

1. A thermal imaging system for generating an electrical signal representing an infrared image and comprising an array of closely spaced infrared detectors organized in rows and columns, **characterized in that**

a) an amplifier (20, 30, 40, 50) is associated with each of said detectors (21, 31, 41, 51), each said amplifier having an input (22, 32, 42, 52) to which its associated detector is connected and each amplifier having an output (25, 35, 45, 55), each said amplifier responding to its associated detector detecting a portion of said infrared image to provide an amplified electrical signal representing said portion of said infrared image at its output;

b) biasing means (21B, 36, 46, 56) is commonly associated with each of said detectors and amplifiers;

c) each detector together with its associated amplifier and biasing means constitutes a detector cell;

d) a plurality of said detector cells is arranged on a common substrate to form said array.

2. A system according to claim 1, **characterized in that** each biasing means consists of resistor means having a resistance in the range of $10^{12}$ to $10^{15}$ ohms.

3. A system according to claim 2, **characterized in that** the resistor means (21B) is fabricated by doping the material from which the detectors (21A) are made to produce a resistance in the range of $10^{12}$ to $10^{15}$ ohms (Fig. 2.)

4. A system according to claim 2, **characterized in that** the resistor means consists of a diode (36) connected in parallel with said detector (31), said diode always being operated in its nonconduction state and being used to bias both said detector and said amplifier (30), said nonconducting diode operating as a resistor having a resistance in the range of $10^{12}$ to $10^{15}$ ohms (Fig. 4)

5. A system according to claim 2, **characterized in that** the resistor means consists of a bias transistor (56) associated with and connected to the input of said amplifier (50), said bias transistor being operated to act as a high impedance resistor and being used to bias both said detector (51) and said amplifier, said bias transistor operating to have an impedance in the range of $10^{12}$ to $10^{15}$ ohms (Fig. 5).

6. A system according to claim 1, **characterized in that** each biasing means consists of a bias switch (46, 56) associated with and connected to the input of said amplifier (40, 50), said bias switch being periodically operated and applying a voltage ($V_R$) to bias said amplifier and said detector (41, 51) to a predetermined bias level, and said bias switch then being disabled to permit said detector to detect said infrared image impinging on it (Fig. 3 and 5).

7. A system according to claim 6, **characterized in that** the bias switch comprises a transistor (46, 56).

8. A system according to one of the preceding claims, **characterized by** a transfer switch (60) connected to the output of said amplifier (20, 30, 40, 50), with said transfer switch being operated to read out the amplifier electrical signal representing said infrared signal impinging on said detector (21, 31, 41, 51).

9. A system according to claim 8, **characterized in that** the transfer switch comprises a bipolar transistor (60).

10. A system according to one of the preceding claims, **characterized by** means (10) for monitoring a supply voltage ($V_s$) supplied to said terminal imaging system and changing said bias voltage ($V_R$) to compensate for changes in said supply voltage.

11. A system according to claim 10, **characterized in that** the monitoring means comprises an integrator (10) which compares said supply voltage ($V_S$) to a reference voltage ($V_{REF}$) and changes said bias voltage ($V_R$) to compensate for changes in said supply voltage.

12. A system according to one of the preceding claims, **characterized in that** the detectors are temperature-sensitive capacitors.

13. A system according to claim 12, **characterized in that** the detectors are pyroelectric detectors utilizing lithium tantalate as the dielectric.

14. A detector cell for a thermal imaging system according to claim 1,3 4 or 5 comprising an infrared detector (21A, 31, 51), **characterized by**

a) an amplifier transistor (20, 30, 50) connected with its gate electrode (22, 32, 52) to said detector;

b) biasing means (21B, 36, 56) constituting a high impedance resistance connected in parallel to said detector and biasing commonly said detector and said amplifier;

c) a transfer transistor (60) constituting a transfer switch connected in series with said amplifier transistor and comprising a control electrode (61) for periodically switching said transfer transistor into its conducting state and therewith connecting the output (25, 35, 55) of said amplifier transistor to an input of a CCD register.

15. A detector cell for a thermal imaging system according to claim 1 or 6 comprising an infrared detector (41, 51),
**characterized by**

a) an amplifier transistor (40, 50) connected with its gate electrode (42, 52) to said detector;

b) a bias switch (46, 56) associated with and connected to the input of said amplifier (40,50), said bias switch being periodically operated and applying a voltage ($V_R$) to bias said amplifier and said detector (41, 51) to a predetermined bias level, and said bias switch then being disabled to permit said detector to detect said infrared image impinging on it;

c) a transfer transistor (60) constituting a transfer switch connected in series with said amplifier transistor and comprising a control electrode (61) for periodically switching said transfer transistor into its conduction state and therewith connecting the output (45) of said amplifier transistor to an input of a CCD register.

3210813

FIG. 1

FIG. 2

FIG. 3

Honeywell

FIG. 4

FIG. 5

FIG. 6